(19) **Europäisches Patentamt European Patent Office Office européen des brevets**

(11) **EP 4 478 575 A1**

(12) **EUROPEAN PATENT APPLICATION**
published in accordance with Art. 153(4) EPC

(43) Date of publication:
**18.12.2024 Bulletin 2024/51**

(21) Application number: **22709336.6**

(22) Date of filing: **10.02.2022**

(51) International Patent Classification (IPC):
*H02J 3/46* (2006.01)

(52) Cooperative Patent Classification (CPC):
**H02J 3/46**

(86) International application number:
**PCT/ES2022/070067**

(87) International publication number:
**WO 2023/152407 (17.08.2023 Gazette 2023/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ingeteam Power Technology, S.A.
48170 Zamudio (Bizkaia) (ES)**

(72) Inventors:
• **GONZÁLEZ SENOSIÁIN, Roberto
31621 Sarriguren (ES)**

• **BALDA BELZUNEGUI, Julián
31621 Sarriguren (ES)**
• **NAVARRETE KHIBIT, Manuel
31621 Sarriguren (ES)**
• **ERDOCIA ZABALA, Ioseba
31621 Sarriguren (ES)**
• **URTASUN ERBURU, Andoni
31006 Pamplona (ES)**
• **MARROYO PALOMO, Luis
31006 Pamplona (ES)**

(74) Representative: **Balder IP Law, S.L.
Paseo de la Castellana 93
5ª planta
28046 Madrid (ES)**

(54) **METHOD AND SYSTEM FOR CONTROLLING ELECTRONIC CONVERTERS**

(57) The invention relates to a method for controlling an electronic converter ($10_n$), comprising: for each of the phases of the electronic converter ($10_n$), measuring an instantaneous current ($i_n$; $i_{r,n}$ $i_{s,n}$ $i_{t,n}$) and an instantaneous voltage ($v_n$; $v_{r,n}$ $v_{s,n}$ $v_{t,n}$) of the electronic converter ($10_n$); calculating (20), from the current measurements ($i_n$; $i_{r,n}$ $i_{s,n}$ $i_{t,n}$) and voltage measurements ($v_n$; $v_{r,n}$ $v_{s,n}$ $v_{t,n}$): an active power ($P_n$) exchanged by the electronic converter ($10_n$) and an effective value of voltage ($V_n$) of the electronic converter ($10_n$); calculating an effective value of voltage ($E_n$) imposed by the conversion step of the electronic converter ($10_n$). In addition, the load angle ($\delta_n$) or a load angle-dependent parameter ($\delta_n$) is obtained from the active power ($P_n$), the effective value of voltage ($V_n$) and the effective value of imposed voltage ($E_n$); the frequency ($f_{e,n}$) of a voltage set-point that must be generated by the electronic converter ($10_n$) is calculated (26, 42) from the load angle ($\delta_n$) or the load angle-dependent parameter ($\delta_n$); and the voltage set-point to be generated by the electronic converter is obtained. A system for controlling an electronic converter ($10_n$) to carry out the method described above is also provided.

FIG. 4

**Description**

**FIELD OF THE INVENTION**

The present invention belongs to the field of electronic converters, whether connected to the electricity grid or to isolated systems. More specifically, the invention relates to methods and systems for controlling electronic converters.

**PRIOR STATE OF THE ART**

Today, renewable energies (photovoltaic, wind, etc.) together with energy storage systems (batteries, fuel cells, etc.) constitute an attractive alternative for producing electrical energy in a sustainable way. The energy generated by systems of this type can be used both to power loads isolated from the electricity grid (isolated systems) and to inject it into the electricity grid (grid connection systems). Sometimes these systems can work alternately in one or another mode of operation in the event that the grid connection is not always available.

In general, generation systems (photovoltaic, wind, etc.) and storage systems (batteries, fuel cells, etc.) of this type require DC to AC electronic converters, also called inverters, to be connected to the loads or to the grid.

When connected to isolated systems, i.e., to systems not connected to the grid, the inverters are controlled to behave as voltage sources, contributing to the generation and maintenance of the amplitude and frequency of the alternating voltage generated. On the contrary, in grid connection, inverters have traditionally been controlled as current sources, following the voltage at the connection point to exchange the desired active and reactive powers with the grid. This has been possible since until now synchronous generators (GS) have been mainly responsible for maintaining the amplitude and frequency of the grid voltage. However, the increasing penetration of renewable energy sources and storage systems is causing GS to be replaced by generators connected through inverters. In this scenario, maintaining control of the inverters as current sources could end up compromising the stability of the grid voltage amplitude and frequency. To solve this problem, the inverters must be controlled as voltage sources so that they participate in the maintenance of the grid voltage and frequency.

A widespread method for controlling the amplitude and frequency of the alternating voltage in systems with several inverters connected in parallel working as voltage sources is droop control. This technique makes it possible to guarantee the distribution of active and reactive power between the different generators, according to the capacity thereof, based on the local measurements in each inverter, without requiring communication between them.

Generally, the droop control has parallel control loops, the active power-frequency (P-f) droop and the reactive power-voltage (Q-V) droop, with which the frequency and amplitude of the reference voltage that must be generated by the inverter based on the active and reactive power measurements, respectively, are calculated. The P-f droop is responsible for keeping the inverters synchronised and, at the same time, balancing the distribution of active power. An example of this method is found in the document: "Zhong, Q. C., & Zeng, Y. Universal droop control of inverters with different types of output impedance. IEEE access, 2016, 4, 702-712".

In isolated systems, the operation of the P-f droop causes the steady-state frequency to vary as a function of the power consumed by the loads connected to the system. To avoid this, the active power-load angle (P-$\delta$) droop has been proposed, which directly calculates the difference in angle with the output voltage that the inverter has to generate to exchange the desired active power. An example of this method is found in the document: "B. John, A. Ghosh and F. Zare, Load Sharing in Medium Voltage Islanded Microgrids With Advanced Angle Droop Control, in IEEE Transactions on Smart Grid, vol. 9, no. 6, pp. 6461-6469, Nov. 2018". However, this technique has the drawbacks of being only valid for isolated systems and requiring fast and precise communication between inverters or the use of GPS synchronisation systems to guarantee the stable behaviour of the system.

These two methods, based on the use of active power as the droop input variable, provide stable behaviour under normal operating conditions, i.e., when the system voltage remains close to the rated voltage and the currents of the inverters do not exceed the rated value thereof. However, in the presence of excess loads, voltage dips or short circuits, the currents exchanged by the inverters could exceed the rated value thereof, which could cause their destruction. To prevent this, inverters controlled as voltage sources include methods for limiting the current (supplied current) to (or below) the maximum value thereof. In this way, in current limitation, the amplitude of the voltage is not controlled and the voltage droop is deactivated. On the contrary, the frequency droop remains active since the inverter must continue imposing the frequency and it thus continues to participate in maintaining the same. In this situation, the output voltage of the inverter decreases, causing the active power to no longer change in the same manner with the overload level of the inverter and may even decrease instead of increase when the overload increases. As a consequence, droop control methods based on active power do not present stable behaviour in current limitation and tend to desynchronise the inverters.

To avoid the problem of desynchronisation in cases of overload, voltage dips or short circuits, some methods proposed in the state of the art include a support PLL (Phase Locked Loop) to control the frequency in these situations. An example of this method is found in the document "Shi, K., Song, W., Xu, P., Liu, R., Fang, Z., & Ji, Y. Low-voltage ride-through control strategy for a virtual synchronous generator based on smooth switching. IEEE Access, 2017, 6, 2703-2711". However, the use of the support PLL causes the inverters to stop contributing to the maintenance of the system frequency and, in addition, has stability problems in certain line impedance ranges, as reflected in the document "Hu, Qi, et al. Large signal synchronizing instability of PLL-based VSC connected to weak AC grid. IEEE Transactions on Power Systems, 2019, vol. 34, no. 4, p. 3220-3229".

To reduce the influence of the voltage on the variable with which the frequency droop is performed, the use of the active current ($I_{active}$-f droop) has been proposed. This variable is obtained by dividing the active power by the amplitude of the voltage at the inverter output. Using the $I_{act}$-f droop, a behaviour similar to that of the P-f droop is achieved under normal operating conditions, and it improves the behaviour in the event of overloads and shallow voltage dips. An example of this method is found in the document "Brabandere, K.D., Bolsens, B., Keybus, J.V., et al.: 'A voltage and frequency droop control method for parallel inverters', IEEE Trans. Power Electron., 2007, 22, (4), pp. 1107-1115". However, by limiting the current, an increase in the overload does not translate into an increase in the active current, but rather it stays practically constant, which does not guarantee that the inverters remain synchronised under any operating condition, such as deep voltage dips or short circuits.

## DESCRIPTION OF THE INVENTION

The present invention provides a method and a system that aim to solve the drawbacks of the methods and systems described in the state of the art. The present invention provides a method and a system for controlling an electronic converter connected to an isolated system (for example, to one or more loads) or to the electricity grid. To perform this control, the method calculates, based on the load angle of the electronic converter or on a load angle-dependent parameter, the frequency of a voltage set-point that must be generated by the electronic converter. The method is applicable to electronic converters connected in parallel, whether to isolated systems (for example, loads) or to the electricity grid.

In the context of the present invention, the terms "electronic converter" and "inverter" are used interchangeably. The electronic converter can be single-phase or three-phase.

Obtaining the frequency of the voltage set-point is based on the droop concept. Thus, the frequency of the voltage set-point is determined by applying a frequency droop control using the load angle (or a load angle-dependent parameter) directly as input variable, which is the phase shift between the voltage imposed by the electronic converter before the output filter and the voltage at the filter output, instead of using the active power or active current, as is performed in the state of the art. This variable represents the phase shift between the electronic converter and the system (the electricity grid and/or isolated systems), both under normal conditions, wherein the voltages present values close to the rated (nominal) value, and in the presence of excess loads, voltage dips or short circuits, wherein the amplitude of the voltages decreases, for example, due to the actuation of a current limiting method.

The method and system are applicable, among others, to DC/AC (Direct Current/Alternating Current) electronic converters or to DC/DC + DC/AC electronic converters.

The converters can be connected in parallel with the electricity grid or to a system of loads isolated from the grid, either independently or with several converters in parallel.

The proposed control method is especially applicable in inverters controlled as a voltage source. The method can be applied, among others, to inverters controlled as a voltage source that also implement a current limiting method. In each execution period, the proposed control method determines the frequency of the voltage or voltages (voltage set-point) that the electronic converter must impose from the load angle ($\delta$) or a variant of the same, using a load angle - frequency droop ($\delta$-f droop). To obtain the amplitude of the voltages that the electronic converter must impose, any of the existing methods of the state of the art can be used. In this way, the electronic converter is controlled at the output thereof as an alternating voltage source.

In a first aspect of the invention, a method for controlling an electronic converter is provided. The method comprises the steps of: for each of the phases of the electronic converter, measuring an instantaneous current and an instantaneous voltage of the electronic converter; calculating, from the current measurements and voltage measurements: an active power exchanged by the electronic converter and an effective value of voltage of the electronic converter; and calculating an effective value of voltage imposed by the conversion step of the electronic converter. The method further comprises: obtaining the load angle or a load angle-dependent parameter from the active power, the effective value of voltage and the effective value of imposed voltage; calculating the frequency of a voltage set-point that must be generated by the electronic converter from the load angle or on the load angle-dependent parameter; obtaining the voltage set-point that must be generated by the electronic converter from the calculated frequency.

The method calculates the frequency of the voltage set-point that must be generated by the electronic converter from the load angle of the electronic converter, or from a load angle-dependent parameter. This variable directly represents the phase shift of each electronic converter with the system regardless of the operating conditions.

In embodiments of the invention, the frequency of the voltage set-point that must be generated by the electronic converter is obtained by applying a frequency droop to the load angle or to the load angle-dependent parameter.

In embodiments of the invention, the load angle or load angle-dependent parameter is filtered before applying the frequency droop.

In embodiments of the invention, the applied frequency droop follows a linear function.

In embodiments of the invention, the measured voltage has been measured at the terminals of a capacitor of an output filter of each phase of the electronic converter. Alternatively, the measured voltage has been measured at the output of the electronic converter. Alternatively, the measured voltage has been obtained by measuring the line voltage.

In embodiments of the invention, the load angle or load angle-dependent parameter is obtained from the following equation:

$$P_n = \frac{E_n \cdot V_n}{|\vec{Z}_n|^2} \cdot X_n \cdot sin(\delta_n) + \frac{V_n}{|\vec{Z}_n|^2} \cdot R_n \cdot (E_n \cdot cos(\delta_n) - V_n)$$

wherein $P_n$ is the active power exchanged by the electronic converter, $V_n$ is the effective value of voltage of the electronic converter, $E_n$ is the effective value of voltage imposed by the conversion step of the electronic converter and $\vec{Z}_n = R_n + jX_n$ is the impedance of the filter of the electronic converter.

In embodiments of the invention, the load angle or load angle-dependent parameter is obtained from the following equation:

$$P_n = \frac{E_n \cdot V_n}{X_n} \cdot sin(\delta_n)$$

wherein $P_n$ is the active power exchanged by the electronic converter, $V_n$ is the effective value of voltage of the electronic converter, $E_n$ is the effective value of voltage imposed by the conversion step of the electronic converter and $X_n$ is the reactance of the filter of the electronic converter.

In embodiments of the invention, a voltage droop is also included in addition to the aforementioned frequency droop, which also intervenes in the calculation of the voltage set-point(s), to obtain an amplitude of said set-point(s). A conventional voltage droop can be used to calculate the amplitude of the voltage set-point(s) that must be generated by the electronic converter. In this way, the voltage set-point(s) is/are obtained from the frequency and from this amplitude value. For example, the voltage droop can be performed with both the reactive power variable, Q, and the reactive current variable, $I_{react}$, as proposed in the state of the art.

In embodiments of the invention, the method further comprises, once the voltage set-point is obtained, applying a voltage control step to determine a voltage that the electronic converter must impose to achieve that voltage set-point. The voltage control step may implement, for example, a voltage control in alpha and beta axes, or a voltage control in dq axes, or an open-loop voltage control.

In embodiments of the invention, the method further comprises a complementary current limiting step, which is preferably applied at the output of the voltage control, for which any of the existing methods of the state of the art can be used.

In embodiments of the invention, the method further comprises correcting the load angle or the load angle-dependent parameter, to compensate for the phase shift introduced by the current limitation between the voltage set-point and the voltage imposed by the electronic converter.

In embodiments of the invention, the method further comprises correcting the load angle or the load angle-dependent parameter, to compensate for any possible phase shift between the voltage set-point and the voltage imposed by the electronic converter.

In embodiments of the invention, the function used to calculate the frequency of a voltage set-point may be predetermined or may be dynamically modified by an external control unit.

In embodiments of the invention, the method is applied to a plurality of electronic converters connected in parallel.

In embodiments of the invention, the method is applied to one or more single-phase electronic converters. Alternatively, the method is applied to one or more three-phase electronic converters.

In embodiments of the invention, the method is repeated at moments in time that are marked according to a clock frequency.

A second aspect of the invention provides a system for controlling an electronic converter to carry out the method according to the first aspect of the invention. The control system comprises: means for measuring an instantaneous current and an instantaneous voltage of the electronic converter; means for: calculating, from the current measurements and voltage measurements: an active power exchanged by the electronic converter and an effective value of phase voltage of the electronic converter; calculating an effective value of voltage imposed by the conversion step of the electronic converter; obtaining the load angle or a load angle-dependent parameter from the active power, the effective value of voltage and the effective value of imposed voltage; calculating the frequency of a voltage set-point that must be generated by the electronic converter from the load angle or on the load angle-dependent parameter; and obtaining the voltage set-point that must be imposed on the electronic converter from said frequency.

In embodiments of the invention, the control system further comprises a voltage controller.

In embodiments of the invention, the control system further comprises a current controller.

The method and system for controlling electronic converters guarantee that the electronic converters remain synchronised both under normal operating conditions and in the presence of excess loads, voltage dips or short circuits, without requiring the introduction of communication means (input/output interfaces, transmitters/receivers, antennas, etc.) between the electronic converters.

The method for controlling an electronic converter of the invention is performed in a plurality of time instants. Said time instants relate, in the present description, to each sampling operation according to a frequency, i.e., to clock ticks or pulses. In general, the sampling frequency falls within the usual ranges of controllers used in systems for controlling inverters, for example, at the switching frequency of the converter or multiples or sub-multiples thereof. That is, the control method or algorithm is executed periodically.

The execution period can take a value in the range between 1 and 100,000 $\mu$s (microseconds, $10^{-6}$ seconds), such as a value between 10 and 50,000 $\mu$s, or between 10 and 10,000 $\mu$s, or between 10 and 2,000, or between 50 and 1,200, or between 50 and 200 $\mu$s, or between 80 and 150 $\mu$s. For example, it runs once every 1,000 $\mu$s (1 ms).

In each execution period, the droop control calculates the frequency (and, if applicable, the amplitude) of the voltage set-point(s) and, based on the frequency and amplitude, the voltage set-points that must be generated by the electronic converter are obtained. Once the voltage set-point or set-points have been obtained, a voltage control step can be applied to determine a voltage that the electronic converter must impose on each phase (i.e., whether it is single-phase or three-phase) to achieve that voltage set-point. In the event that the current approaches or exceeds a maximum value, the voltages imposed by the electronic converter before the filter may optionally be modified by a current limiting method.

Thus, the proposed method has the following advantages:

- Under normal operating conditions, the operation of the $\delta$-f droop enables the converters to remain synchronised and the distribution of active load between them occurs based on the capacity thereof.
- In excess loads, voltage dips or short circuits, the load angle $\delta$ increases in the same way as under normal operating conditions. This feature guarantees that the electronic converters remain synchronised under any operating condition. This does not happen with the P-f droop and the $I_{act}$-f droop, because the active power, P, and the active current, $I_{act}$, depend on the amplitude of the voltages and, therefore, are not representative of the overload level when the current limitation acts.
- The electronic converters remaining synchronised in the presence of excess loads, voltage dips or short circuits, something that is guaranteed with the $\delta$-f droop, enables rapid voltage recovery when the electronic converters return to normal operating conditions.
- The introduction of a support PLL is not required because in any situation, including excess loads, voltage dips or short circuits, the $\delta$-f droop ensures the synchronisation of the inverters.

These and other advantages and features of the invention will become apparent in light of the figures and the detailed description of the invention.

**BRIEF DESCRIPTION OF DRAWINGS**

Figure 1A shows a connection diagram of a single-phase electronic converter, the input of which can be an energy source or a storage system and at the output thereof it is connected, through an output filter, to the main electricity grid or to a load.

Figure 1B shows a connection diagram of several single-phase electronic converters like the one in Figure 1A, connected in parallel.

Figure 1C shows a connection diagram of a three-phase electronic converter, the input of which can be an energy source or a storage system and at the output thereof it is connected, through an output filter, to the main electricity grid or to one or more loads.

Figure 2 shows the single-phase equivalent circuit of the impedance of the filter of an electronic converter according to Figures 1A-1C and a phasor representation of the currents and voltages.

Figure 3A shows a block diagram corresponding to obtaining, by applying a frequency droop control, the frequency of a voltage set-point that must be generated by an electronic converter, according to one embodiment of the invention.

Figure 3B shows a block diagram corresponding to obtaining, by applying a frequency droop control, the frequency of a voltage set-point that must be generated by an electronic converter, according to another embodiment of the invention.

Figure 4 shows a block diagram representing a method for controlling an electronic converter, according to embodiments of the invention.

Figure 5 shows a block diagram corresponding to the frequency droop control performed with the active power variable (P-f droop) of the state of the art.

Figure 6 shows a block diagram corresponding to the frequency droop control performed with the active current variable ($I_{act}$-f droop) of the state of the art.

Figure 7 shows the simulation results of a P-f droop control of the state of the art, in the event of an overload of 10%.

Figure 8 shows the simulation results of an $I_{act}$-f droop control of the state of the art, in the event of an overload of 10%.

Figure 9 shows the simulation results of the method with the $\delta$-f droop of the invention, in the event of an overload of 10%.

Figure 10 shows the simulation results of a P-f droop control of the state of the art, in the event of a three-phase short circuit with short circuit voltage $U_{DC}$=10%.

Figure 11 shows the simulation results of an $I_{act}$-f droop control of the state of the art, in the event of a three-phase short circuit with short circuit voltage $U_{DC}$=10%.

Figure 12 shows the simulation results of the method with the $\sin(\delta)$-f droop control of the invention, in the event of a three-phase short circuit with short circuit voltage $U_{DC}$=10%.

## DESCRIPTION OF A MANNER TO CARRY OUT THE INVENTION

The control method of the invention is especially adapted for controlling an electronic converter, such as a DC/AC converter, as a voltage source. The electronic converter may be working in parallel with other electronic converters and/or power generators. The electronic converter can be connected at the output thereof to the main electricity grid, to a load (for example, in the case of a single-phase converter) or to a set of isolated loads (for example, in the case of a three-phase converter).

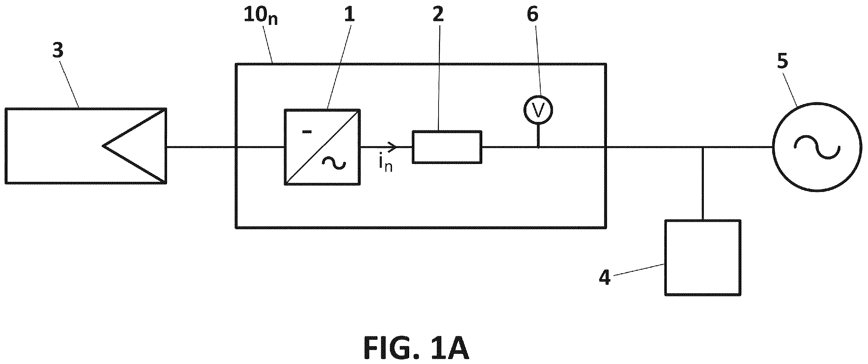

Figure 1A shows a connection diagram of an electronic converter $10_n$, (in Figure 1A, n=1) specifically of a DC/AC electronic converter. The connection diagram shown corresponds to the phase of a single-phase converter. The electronic converter $10_n$ has been schematically represented as two blocks 1, 2. Block 1 represents the conversion step, which is conventional and falls outside the scope of the present invention. Block 2 represents the output filter, which can be an LCL filter, an LC filter or any other conventional variant. The output filter 2 is intended to filter switching harmonics. The input 3 of the converter $10_n$ can be an energy source (for example, a continuous energy source) or a storage system. If it is an energy source, it can be of different types, such as a renewable generation source (photovoltaic solar or wind, for example). If it is a storage system, it can be a battery, a fuel cell or a capacitor bank, for example. The output of the converter $10_n$, through the output filter 2, is connected to the electricity grid 5 (for example, to the main electricity grid) or to a load 4. Between the converter $10_n$ (specifically, the output step 2) and the load 4 or the electricity grid 5 there may be a transformer, not shown in Figure 1A.

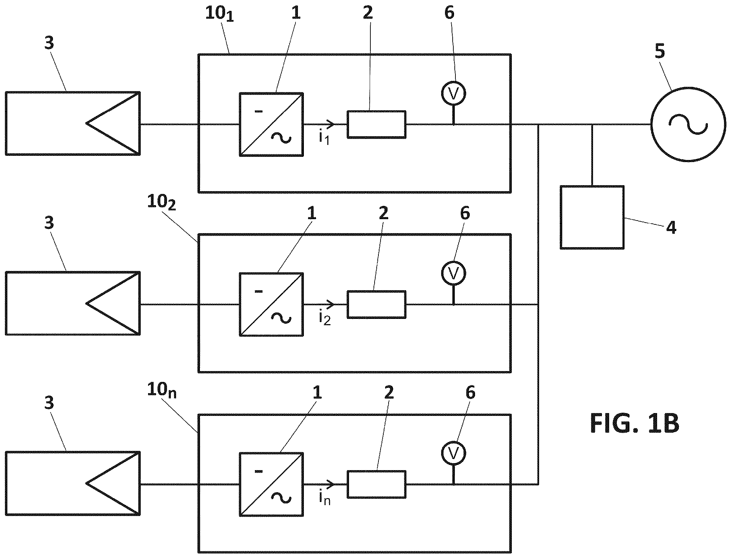

The electronic converter $10_n$ may be working in parallel with other electronic converters and/or power generators. Figure 1B shows a connection diagram of several electronic converters $10_1$ ... $10_n$ in parallel like the one in Figure 1A.

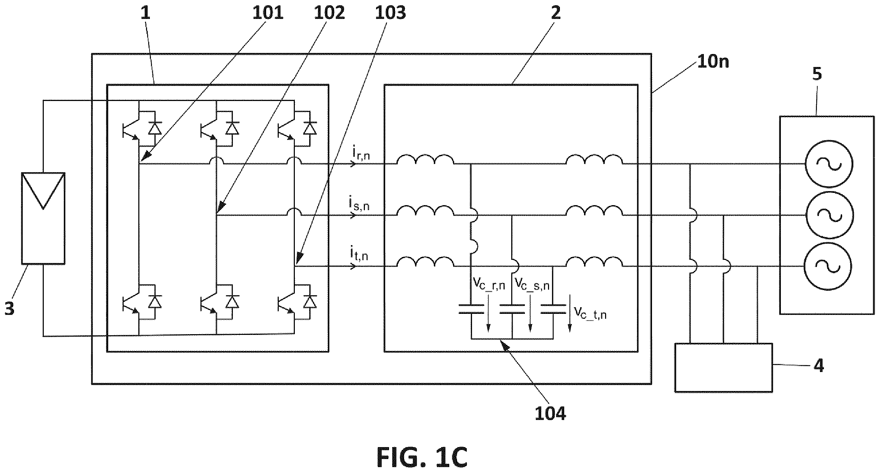

Figure 1C shows a connection diagram of an electronic converter $10_n$, (in Figure 1C, n=1) specifically of a DC/AC electronic converter, which in this case is a three-phase converter. The same reference numbers as in Figures 1A-1B have been used to indicate the same elements. To show the three-phase converter, both a possible implementation of the conversion step 1 and of the output filter 2 have been schematically detailed. As in Figure 1A, the input 3 of the converter $10_n$ can be an energy source (for example, a continuous energy source) or a storage system. If it is an energy source, it can be of different types, such as a renewable generation source (photovoltaic solar or wind, for example). If it is a storage system, it can be a battery, a fuel cell or a capacitor bank, for example. The output of the converter $10_n$, through the output filter 2, is connected to the electricity grid 5 (for example, to the main electricity grid) or to several loads (for example, one per phase). In Figure 1C, the output filter 2 is an LCL filter, but an LC filter or any other variant could alternatively be used. Between the converter $10_n$ (specifically, the output step 2) and the load(s) 4 or the electricity grid 5 there may be a transformer, not shown in Figure 1C. The three-phase electronic converter $10_n$ of Figure 1C may be working in parallel with other electronic converters and/or power generators. For conciseness, this possibility has not been illustrated, but a skilled person will understand that the connection diagram thereof is similar to that of Figure 1B.

The method of the invention implements a control of the voltage generated by the electronic converter $10_n$. The control method is executed at all times and, in the event of several converters $10_1$ ... $10_n$ (Figure 1B), in parallel between them. Specifically, the control method is applied to the phase (or phases) of the conversion step 1 of the one or more electronic converters $10_n$.

In implementations where the output filter 2 is an LCL filter, the output voltage of the converter $10_n$ (i.e., after the filtering step 2) can be both the voltage measured at the terminals of the capacitor of the output filter 2 (Vc_r,n, $V_{C\_s,n}$, $V_{C\_t,n}$ in Figure 1C), and the voltage in the grid 5 or load (loads) 4, or the voltage measured in the line, as represented in Figures 1A-1B through the voltmeter 6. This is applicable to both single-phase and three-phase converters. In the event that the output filter 2 of the phase (or phases) is an LC filter, not illustrated, the voltage measured at the output (in the grid 5 or load(s) 4) is the same as the voltage measured at the terminals of the capacitator of the LC filter.

At each instant, the control method calculates the voltage set-points that should be generated in each phase (if the converter is three-phase) or in the phase (if the converter is single-phase) by the electronic converter $10_n$ so that said phase behaves as an alternating voltage source with certain amplitude and frequency values, i.e., those desired depending on the load, the loads or the grid to which the converter is going to be connected.

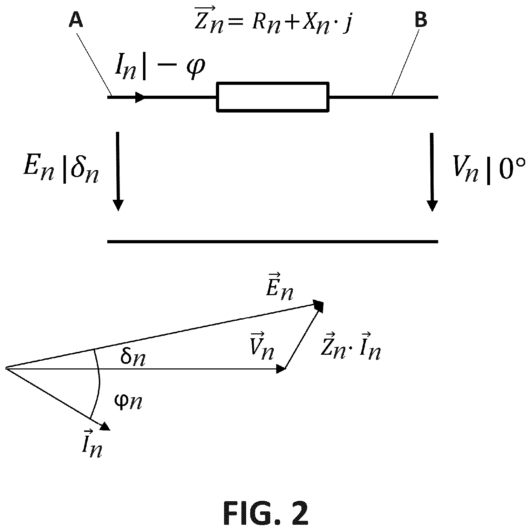

Figure 2 shows the single-phase equivalent circuit of the impedance of the filter 2 of each electronic converter $10_n$ and a phasor representation of currents and voltages. In other words, the point indicated as "A" in Figure 2 corresponds to the output of the conversion step 1 of a converter $10_n$ (or input of the filtering step 2), and the point indicated as "B" in Figure 2 corresponds to the output of the filtering step 2 of a converter $10_n$. The filter impedance $\vec{Z_n}$ of each electronic converter $10_n$ can be represented as shown in Figure 2, $\vec{Z_n} = R_n + j X_n$, wherein the real portion is the filter resistance $R_n$ and the imaginary portion is the filter reactance $X_n$. Figure 2 also shows: the effective value of the voltage $E_n$ imposed by the conversion step 1 before the filter 2 (for example, in Figure 1C, effective value $e_{r,n}$ between the point 101 and the neutral 104, effective value $e_{s,n}$ between the point 102 and the neutral 104, and effective value $e_{t,n}$ between the point 103 and the neutral 104); the effective value of the current $I_n$ of the converter (current $i_n$ in Figure 1A, current $i_1$, $i_2$, ... $i_n$ in Figure 1B, current $i_{r,n}$, $i_{s,n}$, ... $i_{t,n}$ in Figure 1C); and the effective value $V_n$ of the output voltage of the converter $10_n$. In the equivalent circuit of Figure 2, the angle $\varphi_n$ is also mentioned, which expresses the phase shift between the current and output voltage of the converter, and the load angle $\delta n$, which represents the phase shift of the voltage of each electronic converter $10_n$ with that of the system. Thus, at the input "A" the vector of the voltage imposed by the converter $E_n$ with a given loading angle $\delta n$ is expressed, compared to the output "B", in which the vector of the output voltage $V_n$ is expressed, considering this vector as an angle reference.

The lower portion of Figure 2 shows the vectors: voltage imposed $\vec{E_n}$ by the converter 10 before the filter 2 (i.e., at the output of conversion step 1), output voltage of the converter $\vec{V_n}$ and current of the converter $\vec{I_n}$. It can be seen that the load angle $\delta_n$ represents the angle between the voltage imposed $\vec{E_n}$ by the conversion step 1 and the output voltage $\vec{V_n}$.

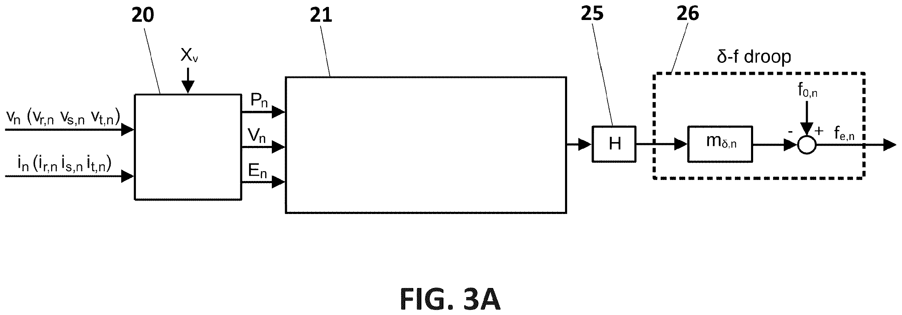

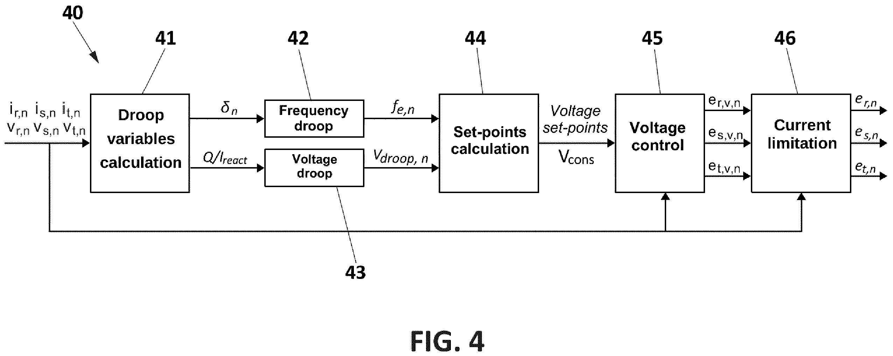

The proposed method for controlling an electronic converter $10_n$ comprises a step of calculating the frequency of a voltage set-point that must be generated by the electronic converter. The proposed method for determining this frequency is outlined in Figures 3A-3B. The frequency of the voltage set-point is obtained by applying a frequency droop using the load angle variable $\delta$ or a load angle-dependent parameter $\delta$ ($\delta$-f droop). The proposed method or frequency droop control is subsequently used to obtain the voltage set-point (in the case of a single-phase converter) or set-points (in the case of a three-phase converter) that must be generated by the electronic converter. Once the voltage set-point(s) has been obtained, a voltage control can be applied to determine the voltage (one per phase, in the case of a three-phase converter) that the converter must impose to achieve that voltage set-point. The complete control is schematised as an example in Figure 4.

Under normal operating conditions, the effective value of the voltage $E_n$ imposed by the converter and the effective value of the output (or phase) voltage of the converter $V_n$ hardly vary in amplitude over many time cycles. However, in current limiting situations, $E_n$ and $V_n$ decrease (they no longer maintain their amplitude substantially constant over time). This causes, in such circumstances, that the power exchanged by the converter $P_n$ decreases instead of increases. That is, under current limiting circumstances (for example, overload), the exchanged power $P_n$ is not representative because it does not create a sensation of overload.

For this reason, obtaining the frequency of the voltage set-point from a variable that does not depend on the voltage $E_n$ imposed by the converter or on the output voltage of the converter $V_n$ is proposed. Specifically, obtaining the frequency of the voltage set-point that must be generated by the electronic converter (frequency that is obtained using a method or droop control) from the load angle $\delta_n$, or from a parameter dependent on the same, is proposed. This ensures the correct reaction of the electronic converter to changes in any operating mode.

Therefore, to determine the frequency of the voltage set-point, it is necessary to obtain the load angle $\delta$, or a load angle-dependent parameter $\delta$, which represents the phase shift of the electronic converter 10 with the system to which it is connected at the output thereof (i.e., with the electricity grid 5 or the load or loads 4). With the load angle $\delta$, or alternatively with a parameter dependent on the same, the frequency droop ($\delta$-f droop) will subsequently be carried out to obtain the frequency of the voltage set-point.

Figure 3A shows a general block diagram for obtaining the reference frequency for a converter "n". First, the current $i_n$ of the converter $10_n$ (current i delivered by conversion step 1) and the output voltage $v_n$ of the converter $10_n$ are measured. In Figure 1A, the current of the converter $10_n$ has been represented as $i_n$, while in Figure 1B, it has been represented as $i_1$ ... $i_n$ for the n converters represented; and in Figure 1C, it has been represented as $i_{r,n}$, $i_{s,n}$, $i_{t,n}$ for each of the phases of a three-phase converter. In Figures 1A-1C, the output voltage of the converter $10_n$ can be, as explained, the voltage measured at the terminals of the capacitor of the output filter 2 ($V_{C\_r,n}$, $V_{C\_s,n}$, $V_{C\_t,n}$ in Figure 1C), or the voltage at the output of the converter as represented in the figures through the voltmeter 6. In general, in Figure 3A, the measured current and voltage have been represented as "$i_n$" and "$v_n$". A person of average skill understands that for a three-phase "n" converter, the currents of each phase ($i_{r,n}$ $i_{s,n}$ $i_{t,n}$) and the output voltages of each phase ($v_{r,n}$ $v_{s,t}$ $v_{t,n}$) or their line equivalents are measured.

Once the instantaneous current $i_n$ and the instantaneous voltage $v_n$ of the converter $10_n$ (or the currents of the three phases $i_{r,n}$ $i_{s,n}$ $i_{t,n}$ and the output voltages of each phase $v_{r,n}$ $v_{s,t}$ $v_{t,n}$) have been measured, in a first step (block 20), from the measured current and voltage: the active power $P_n$ exchanged by the electronic converter $10_n$ and an effective value of voltage $V_n$ at the output of the electronic converter $10_n$, are calculated. For calculations of the exchanged active power $P_n$ and the effective value of voltage $V_n$, conventional techniques are used, known to a person of average skill, which fall outside the scope of the present invention.

In addition, an effective value of voltage $E_n$ imposed by conversion step 1 is calculated. For the calculation of the effective value of imposed voltage $E_n$, conventional techniques are used, known to a person of average skill, which fall outside the scope of the present invention. For example, the effective value of imposed voltage $E_n$ can be obtained from the values applied in a previous cycle of the converter control or, in the event of using a PWM modulation, calculated from the DC voltage (not illustrated) and from the relationship between the modulation and the peak value of the triangle.

Instantaneous measurements of voltage $v_n$ and current $i_n$ can be filtered before being used for the various calculations. The filter used can be implemented both in an analogue and a digital manner. By way of example, the filter may be high pass, low pass, or a combination of both. This filtering is not illustrated (it is generally included in block 20).

Next, from the calculated values of exchanged active power $P_n$, effective value of voltage $V_n$ and effective value of imposed voltage $E_n$, either the load angle $\delta_n$, or a load angle-dependent parameter $\delta_n$ are obtained (block 21 of Figure 3A). With the load angle $\delta_n$, or alternatively with a parameter dependent thereon, the frequency droop ($\delta$-f droop) (block 26) will subsequently be carried out.

A possible manner of obtaining the load angle $\delta_n$ or a parameter dependent thereon is described below. The load angle $\delta_n$ of an electronic converter n can be calculated from the power $P_n$ exchanged through the impedance $\overrightarrow{Z_n}$ of the filter 2. The power $P_n$ exchanged through the impedance $\overrightarrow{Z_n}$ can be expressed as:

$$P_n = \frac{E_n \cdot V_n}{|\vec{z}_n|^2} \cdot X_n \cdot sin(\delta_n) + \frac{V_n}{|\vec{z}_n|^2} \cdot R_n \cdot (E_n \cdot cos(\delta_n) - V_n). \qquad (1)$$

Note that the values of exchanged active power $P_n$, effective value of voltage $V_n$ and effective value of imposed voltage $E_n$ have been previously calculated. Therefore, the power flowing at the output of the converter or, in other words, transferred by the converter or exchanged by the converter depends on the effective values of voltage $E_n$ and $V_n$, on the impedance $\overrightarrow{Z_n}$ and on the load angle $\delta_n$. Therefore, it is possible to obtain the load angle $\delta_n$ of the converter "n" from formula (1) and from the previous calculations made.

After obtaining the load angle $\delta_n$, a filtering step 25 can optionally be applied. For example, a low pass filter can be applied. After optional filtering, from the load angle $\delta_n$ a method or frequency droop control ($\delta$-f droop) can be applied (step 26) to obtain the frequency of the voltage set-point $f_{e,n}$ which must be generated by the electronic converter.

Sometimes the output impedance of the converter $\overrightarrow{Z_n}$ is very inductive, for example, due to the character of the line or the emulation of a virtual inductance at the output. For example, it is possible to emulate a virtual impedance in the calculation of the voltage set-points to guarantee the inductive nature of the output impedance of the electronic converter. On these occasions it can be considered that the real portion of the impedance (the resistance $R_n$) is practically zero. In this case, the formula (1) of the power $P_n$ exchanged by each electronic converter $10_n$ can be simplified as:

$$P_n = \frac{E_n \cdot V_n}{X_n} \cdot sin(\delta_n). \qquad (2)$$

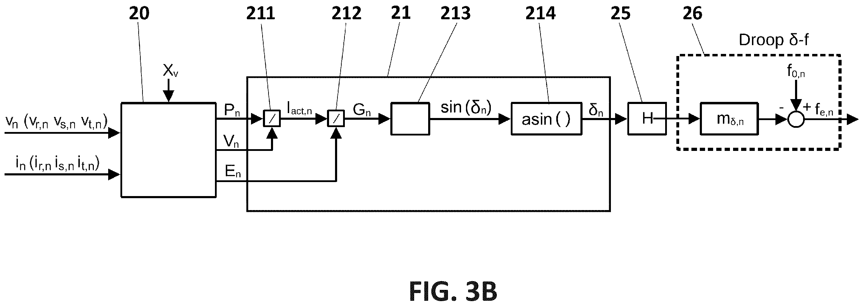

Therefore, the power flowing at the output of the converter or, in other words, transferred by the converter or exchanged by the converter depends on the effective values of line voltage $E_n$ and $V_n$, on the output reactance $X_n$ and on the load angle $\delta_n$. Figure 3B shows a block diagram of an alternative manner of obtaining the reference frequency in a converter $10_n$ in the particular case that the output impedance of the converter $\overrightarrow{Z_n}$ is very inductive. In this case, it is possible to obtain either the load angle $\delta_n$, or a load angle-dependent parameter $\delta_n$, such as the sine of the loading angle $\delta_n$ or the conductance of the converter $10_n$.

Thus, from the previous equation (2), the estimated load angle $\delta_{n,est}$ is obtained:

$$\delta_{n,est} = arcsin\left(\frac{P_n \cdot X_n}{E_n \cdot V_n}\right) \approx \delta_{n,real}, \qquad (3)$$

The load angle obtained is an estimated load angle $\delta_{n,est}$ because it has been assumed that the output impedance of the converter $\overrightarrow{Z_n}$ is very inductive (resistance $R_n$ is practically zero). Under the aforementioned conditions, the estimated load angle $\delta_{n,est}$ is approximately equal to the real load angle $\delta_{n,real}$. Obtaining the estimated load angle $\delta_{n,est}$ from the formula (3), to then calculate the frequency of the voltage set-point $f_{e,n}$, has been shown in Figure 3B, specifically in steps 211-214 of block 21.

Alternatively, from the previous equation (2), the sine of the estimated load angle $\delta_{n,est}$ can be obtained:

$$\left(sin(\delta_n)\right)_{est} = \frac{P_n \cdot X_n}{E_n \cdot V_n} \approx \left(sin(\delta_n)\right)_{real} \qquad (4)$$

wherein $sin(\delta_n)$ is the sine of the loading angle. As before, the sine of the estimated load angle $(sin(\delta_n))_{est}$ is approximately equal to the sine of the real load angle $(sin(\delta_n))_{real}$.

Alternatively, from the previous equation (2), the conductance of the converter can be obtained:

$$G_n = \frac{P_n}{E_n \cdot V_n} \approx \frac{1}{X_n} \cdot sin(\delta_{n,real}) \qquad (5)$$

wherein $G_n$ is the conductance of the electronic converter $10_n$. As in the previous case, the obtained conductance is approximately the real conductance.

An advantage of directly using the load angle $\delta_n$, or a parameter dependent on the load angle, is that the system is linearised, so that the droop dynamics is independent from the relationship between current and voltage.

Returning to the block 21 of Figure 3B, in the step 211, from the exchanged active power $P_n$ and the effective value of voltage $V_n$, the active current $I_{act,n}$ is calculated which enables, using the previously calculated effective value of imposed voltage $E_n$, the conductance $G_n$ of the electronic converter $10_n$ to be obtained (step 212). With this, in the step 213, the sine of the load angle is obtained, $sin(\delta_n)$, since the reactance of the filter $X_n$ is known. From the sine of the load angle, the load angle $\delta_n$ is obtained (step 214).

After obtaining the load angle $\delta_n$, a filtering step 25 can optionally be applied. For example, a low pass filter can be applied. After optional filtering, from the load angle $\delta_n$ a frequency droop method ($\delta$-f droop) can be applied (step 26) to obtain the frequency of the voltage set-point $f_{e,n}$ which must be generated by the electronic converter. The applied droop can be a slope line $m_{\delta_n}$, wherein the slope $m_{\delta_n}$ represents a droop coefficient of the load angle, or any other mathematical function. In one possible embodiment, the $\delta$-f droop method imposes the following linear relationship on each electronic converter:

$$f_{en} = f_{0,n} - m_{\delta_n} \cdot \delta_n$$

wherein $f_{0,n}$ is the frequency when there is no load on the system (base frequency around 50 (or 60) Hz and $m_{\delta_n}$ is a droop coefficient of the load angle. The droop coefficient $m_{\delta_n}$ can be calculated from the following equation:

$$m_{\delta_n} = \frac{M_\delta}{\delta_{n,nom}} = M_\delta \cdot \frac{V_{nom,n}^2}{P_{nom,n} \cdot X_{nom,n}}$$

wherein $M_\delta$ is the droop coefficient per sine unit of load angle and $\delta_{n,nom}$ is the rated (nominal) load angle calculated from the rated (nominal) values of the converter $X_{nom,n}$, $P_{nom,n}$ and $V_{nom,n}$. The coefficient $M_\delta$ represents the maximum desired frequency variation under normal operating conditions. In the case of several converters in parallel (for example, Figure 1B), depending on the situation and circumstances, the coefficient $M_\delta$ can have the same value in all the electronic converters connected in parallel, or it can take different values for some or all electronic converters. It usually takes the same value in all converters connected in parallel. Preferably $V_{nom}$ is the same in all the electronic converters connected in parallel. In this case, the difference between the different $\delta_{n,nom}$ of each converter is due to the differences between the $X_{nom,n}$ and $P_{nom,n}$ of each of them. In this way, it is guaranteed that the distribution of load between electronic converters is proportional to the rated (nominal) power of each of them. Thus, for example, with regard to the percentage of power delivered with respect to the rated power thereof, if the system made up of several converters in parallel is to operate at 80%, each one of the converters is intended to operate at approximately 80% (compared to a situation where some operate at 60% and others at 100%). In short, by monitoring the slope of each frequency droop control, all the converters operate in a similar manner.

Returning to Figure 3B, the output of the block 21 may alternatively be the output of the step 213, i.e., the sine of the load angle, $sin(\delta_n)$. From this sine, the step 26 of frequency droop ($\delta$-f droop) can be applied to obtain the reference frequency $f_{e,n}$, from said sine. For example:

$$f_{en} = f_{0,n} - m_{\delta_n} \cdot sin(\delta_n)$$

Also alternatively, the output of the block 21 may be the output of the step 212, i.e., the conductance $G_n$ of the electronic converter $10_n$. From the conductance, the step 26 of frequency droop ($\delta$-f droop) can be applied to obtain the reference frequency $f_{e,n}$. For example:

$$f_{en} = f_{0,n} - m_{\delta_n} \cdot G_n$$

Obtaining the frequency of the voltage set-point $f_{e,n}$ that must be generated by the electronic converter, and the subsequent obtaining of said set-point (or set-points, in the three-phase case), which is described below, is periodically executed, according to a certain execution period. In general, the control method or algorithm of Figure 4 is executed according to an execution period.

The function (e.g., linear function) used by the droop step 26 may be predetermined or may be dynamically modified to vary the power supplied by each converter. In the event of dynamic modification, the slope or the offset of the linear function can be modified. Normally this function is controlled at a higher level, i.e., in a slower manner with respect to the execution period of the control method. Similarly, the function used by the droop step 26 may be predetermined or may be dynamically modified to vary the frequency generated by each converter. When the function used by the droop step 26 is dynamically modified, the modification may be controlled by an external control unit, not illustrated.

As has been observed, to obtain the load angle $\delta_n$ of each converter $10_n$, or of a load angle-dependent parameter, local measurements of the respective converter are used. In other words, no data is needed from other converters in the set of converters connected in parallel, if any (Figure 1B). In other words, in this sense, each converter is autonomous with respect to the rest, without exchanging variables between them.

As shown in Figure 4, the frequency of the voltage set-point $f_{e,n}$ obtained by the proposed frequency droop method (step 42) is used to calculate a voltage set-point that must be generated by the electronic converter (step 44).

Thus, at each instant, the voltage set-point(s) $V_{cons}$ that must be generated by the electronic converter is/are calculated, depending on whether it is a single-phase or three-phase converter, so that the phase (or each phase) behaves as an alternating voltage source with certain amplitude and phase values.

As shown in Figure 4, in a first step of the control method (block 41), at least one variable to be used in a subsequent droop is calculated from the instantaneous current measurement $i_n$ and instantaneous voltage measurement $v_n$ of the converter $10_n$ (or the instantaneous currents $i_{r,n}$ $i_{s,n}$ $i_{t,n}$ and voltages $v_{r,n}$ $v_{s,n}$ $v_{t,n}$ of each phase). In a possible embodiment, the droop variable calculation block 41 represents the variable(s) required to perform the frequency droop 42. As explained above (Figures 3A-3B), to perform the frequency droop 42, the load angle $\delta_n$ of each converter or a load angle-dependent parameter (for example, the sine of the load angle of the converter or the reactance of the corresponding output filter) is required. Note that, in this case, the block 41 substantially corresponds to the blocks 20 and 21 of Figures 3A-3B. The voltage set-point $V_{cons}$ (or set-points, in the case of a three-phase converter), which is the voltage that the electronic converter must generate in the phase (single-phase) or each phase (three-phase), is normally obtained from a frequency value (frequency $f_{e,n}$ obtained in the droop step 42) and by an amplitude value. To obtain this amplitude value of the voltage set-point $V_{cons}$ preferably, the control method includes, in addition to the frequency droop 42, a voltage droop 43, which provides said amplitude $V_{droop,n}$ of the voltage set-point. In this case, the droop variable calculation block 41 additionally represents the variable(s) required to perform the voltage droop 43. For example, to perform the voltage droop 43 the reactive power $Q_{react,n}$ or the reactive current $I_{react,n}$ can be used. The voltage droop method 43 to obtain the reference voltage $V_{droop,n}$ falls outside the scope of the present invention.

A person skilled in the art will understand that the calculation of variables 41 does not have to be performed together, but that the variable(s) for the frequency droop 42 and for the voltage droop 43 can be independently calculated. In addition, both to obtain the variable(s) required for the execution of the frequency droop 42 (such as the load angle variable or a parameter dependent on the same) and to obtain the variable(s) required for the execution of the voltage droop 42 (such as the reactive power or the reactive current), data (variables or parameters) of the converter $10_n$ itself are locally used, without the need for data intervention of other converters. After the frequency droop 42, which provides the frequency of the voltage set-point $f_{e,n}$ as explained in Figures 3A-3B, and preferably also after the voltage droop 43, which provides the amplitude of the voltage set-point $V_{droop,n}$, the voltage set-point (or voltage set-points in the three-phase case) $V_{cons}$, is obtained (block 44), which is defined by said frequency value $f_{e,n}$ and preferably also the amplitude value $V_{droop,n}$. Thus, the voltage set-point in each phase is determined by the set-point amplitude and set-point frequency previously obtained.

Preferably, obtaining the voltage set-points (block 44) at each instant is performed from the amplitude $V_{droop,n}$ of the voltage set-point and an angle obtained, for example, by integrating the frequency $f_{e,n}$.

And optionally, from these voltage set-points $V_{cons}$, and from the instantaneous current measurement $i_n$ and instantaneous voltage measurement $v_n$ of the converter $10_n$ (or the instantaneous currents $i_{r,n}$ $i_{s,n}$ $i_{t,n}$ and voltages $v_{n,r,n}$ $v_{s,n}$ $v_{t,n}$ of each phase, in the three-phase case), at each instant (execution cycle), a voltage control block 45 calculates the reference voltage $e_{v,n}$ that must be imposed on the phase of the single-phase converter (or the reference voltages $e_{r,v,n}$, $e_{s,v,n}$, $e_{t,v,n}$ that must be imposed on each phase of the three-phase converter), in order to generate the voltage set-point(s), so that the corresponding phase behaves as a voltage source, in particular as an alternating voltage source with certain amplitude and phase values. In other words, the step 45 returns the voltages that must be applied to obtain the aforementioned voltage set-points. In general, three reference voltages are shown $e_{r,v,n}$, $e_{s,v,n}$, $e_{t,v,n}$ corresponding to a three-phase system (note that if the converter is single-phase, the reference voltage will be $e_{v,n}$). The method carried out by the voltage control block 45 falls outside the scope of the present invention. By way of non-limiting example, the voltage control block 45 can calculate the reference voltages $e_{r,v,n}$, $e_{s,v,n}$, $e_{t,v,n}$ by means of open-loop voltage control, control of the instantaneous voltage value on the alpha and beta axes or on the d and q axes, among others. The selected control voltage $e_{r,v,n}$, $e_{s,v,n}$, $e_{t,v,n}$ can then be applied to the corresponding phase of the conversion step of the electronic converter $10_n$.

Optionally, a current limitation or control loop is also executed at each instant, implemented in a current control block 46 such as the one shown for example in Figure 4, which calculates the voltages that must be imposed (or should be generated) in each phase $e_{r,n}$, $e_{s,n}$, $e_{t,n}$ (if the converter is three-phase) or in phase $e_n$ (if the converter is single-phase) by the electronic converter $10_n$ so that the current does not exceed a defined maximum value, for example in the event of current limitation, presence of excess load, voltage dips or short circuits. The current controller 46 also falls outside the scope of the present invention. By way of example, the current controller 46 may be implemented by an internal current loop, or by hysteresis current limiting, or by emulating an impedance, or by any other method of the state of the art. The selected control voltage can then be applied to the corresponding phase of the conversion step of the electronic converter, such that the current in that phase is comprised between a predefined upper current limit and a predefined lower current limit.

In this way, under normal operating conditions, the voltage generated by the inverter in each phase is equal to the voltage $e_n$, $e_{r,n}$, $e_{s,n}$, $e_{t,n}$ calculated by the voltage control 45. However, in faulty or overload situations, there will always be instants in which the reference voltage, of one or several phases, of the current control 46 is more restrictive than that provided by the voltage control 45. In these cases and in these phases, the voltage generated by the electronic converter $10_n$ is equal to the reference voltage provided by the current control 46, which ensures current control at the defined maximum value at the expense of a reduction in the output voltage.

The implementation of the control proposed in the present invention is applicable to the phase of a single-phase electronic converter, taking into account that in a single-phase converter it is only required to generate a reference voltage by the voltage control 45 (or in its case, current limitation 46), or to each of the phases of a three-phase electronic converter. When an installation includes a plurality of electronic converters arranged in parallel (Figure 1B), the control method is simultaneously executed for all of them. However, advantageously, as a consequence of the frequency droop control method of the invention ($\delta$-f droop), the control of each converter is performed from local parameters, of the converter itself. Thus, communication between various converters to share data is prevented. The proposed method for controlling electronic converters operating in parallel guarantees the synchronisation of electronic converters, both under normal operating conditions and in the presence of excess loads, voltage dips or short circuits in the microgrid, without requiring the introduction of communication between electronic converters. The electronic converters remain synchronised at the output of the same when they are connected to any element at the input thereof, whether it is, for example, an energy source or a storage system, or a combination of both; and/or when at the output thereof they are connected to the electricity grid or to a system isolated from the electricity grid.

The calculations are carried out in a control unit comprising processing means, for example, in a processor.

As explained, the electronic converter $10_n$ intends to impose the voltage set-points $V_{cons}$ obtained according to the proposed method (step 44). However, it may occur that the desired voltage cannot be imposed, due to, for example, the action of the current limitation. Therefore, during the execution of the method, or after the application thereof, the load angle $\delta_n$ (or a parameter dependent on the same) of one or more converters can be corrected to compensate for the phase shift between the voltage set-point obtained (step 44) and the voltage finally imposed (output of step 45 or, where appropriate, step 46) by the electronic converter before the filter thereof.

For example, during the execution of the method, or after the application thereof, the load angle $\delta_n$ (or a parameter dependent on the same) of one or more converters can be corrected to compensate for the phase shift introduced by current limitation between the voltage set-point and the voltage finally imposed by the electronic converter before the filter thereof.

The control method does not require the exchange of variables between converters. Specifically, to obtain the reference frequency of each converter $10_n$, which in turn depends on the load angle $\delta_n$ of each converter, or of a load angle-dependent parameter, local measurements of the respective converter are used.

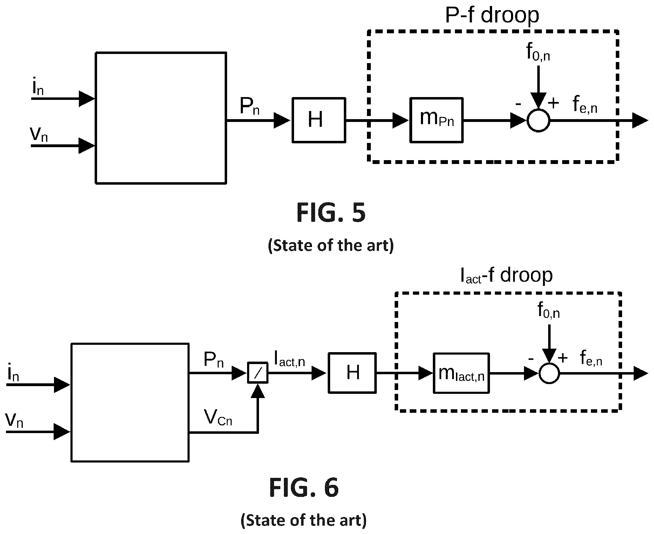

In order to show the advantages of the $\delta$-f droop method proposed in the present invention, compared to conventional P-f droop and $I_{act}$-f droop methods, the control scheme of Figure 4 has been simulated for the case, by way of example, of two electronic converters in parallel. The results obtained can be extended to a configuration with a larger number of electronic converters connected in parallel. Figures 5 and 6 schematically show the performance of the conventional P-f droop and $I_{act}$-f droop, respectively. Figure 3B schematically shows the performance of the $\delta$-f droop of the invention used in the simulation. In all three cases, the same low-pass digital filter H (block 25 in Figure 3B) has been used to filter the measurements of $P_n$, $I_{act,n}$ and $\delta_n$.

The system has been simulated with the three frequency droop control methods for two different situations wherein it is necessary to limit the current of the inverters:

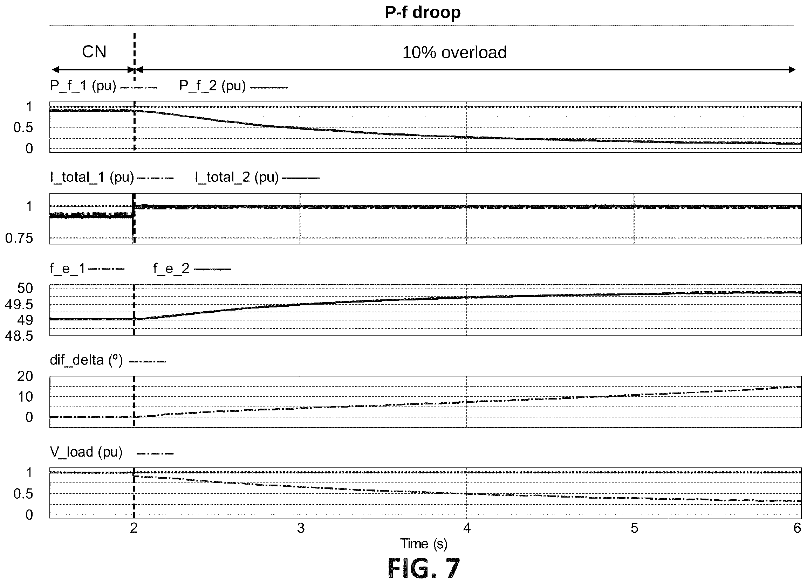

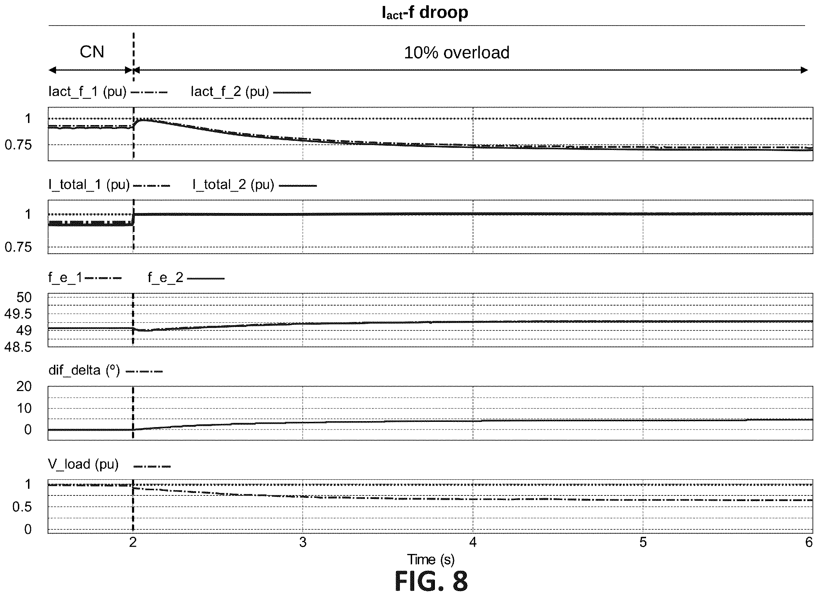

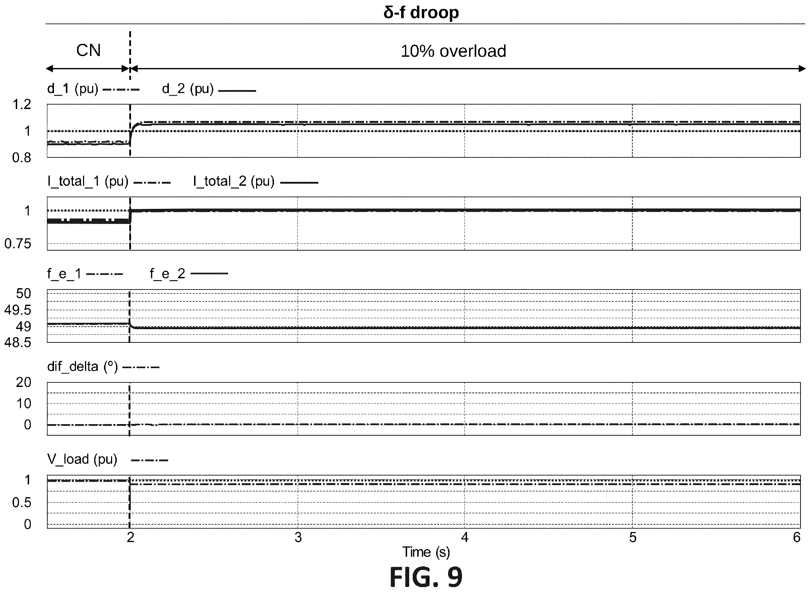

1. 10% overload, i.e., connection of a load the $I_{nom}$ of which exceeds the total rated (nominal) current of the two electronic converters by 10%. The results obtained are shown in Figure 7 for the P-f droop, in Figure 8 for the $I_{act}$-f droop and in Figure 9 for the proposed method with $\delta$-f droop.

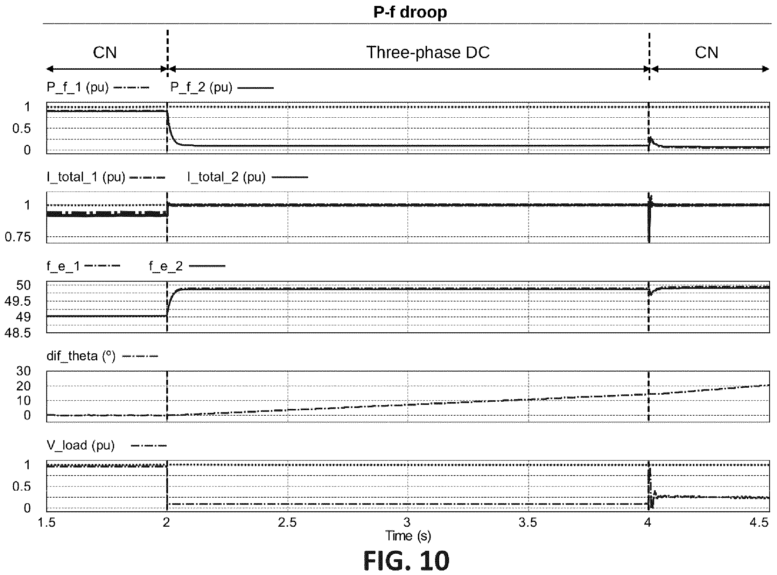

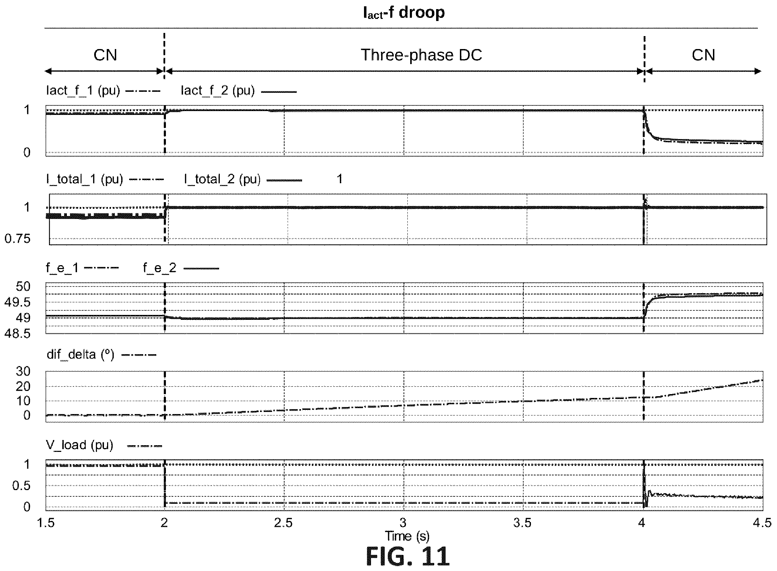

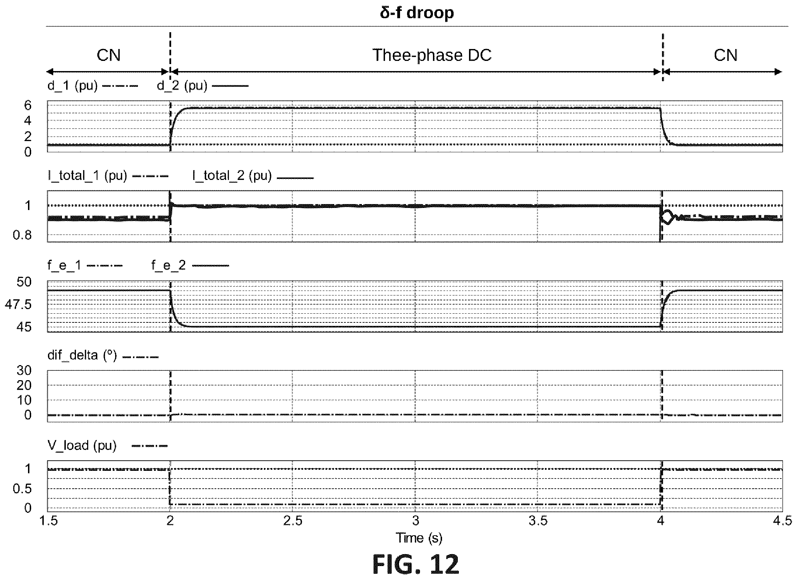

2. Three-phase short circuit with a DC voltage, $U_{DC}$=10%, and a duration of 2s. The results obtained are shown in Figure 10 for the P-f droop, in Figure 11 for the $_{act}$-f droop and in Figure 12 for the proposed method with $\delta$-f droop.

In Figures 7-12, the evolution of the variables of each of the two electronic converters is shown for each case. The first graph of each case shows the filtered variables per unit (pu, values per unit) used in performing the frequency droop (P in Figures 7 and 10, $I_{act}$ in Figures 8 and 11 and $\delta$ in Figures 9 and 12) in order to compare the evolution of each variable depending on the method used. The rest of the graphs show the same variables in the three cases. The second graph shows the evolution of the effective values of the currents in pu, the third shows the evolution of the generated frequencies ($f_{e,i}$), the fourth shows the phase shift between the two electronic converters 1 (dif_delta=$\delta_1$-$\delta_2$) and the fourth shows the total amplitude of the voltage in the load in pu.

In all cases, initially, the two electronic converters are supplying an isolated set of loads of 90% of the total rated (nominal) current and, since limiting the current references is not required, the electronic converters are working under normal operating conditions (CN). In this operating mode, the load distribution is almost equal and the small difference between the load levels of each inverter is due to the fact that possible measurement errors ($\pm$0.5%) that introduce offsets in the calculation of $P_n$, $I_{act,n}$ and $\delta_n$ have been modelled. In this way, the phase shift between inverters (dif_delta) is kept close to 0, so there is no current recirculation between inverters and all the current provided by them is delivered to the load. Since limiting the current is not required, the inverters behave as voltage sources and the load voltage is equal to the rated voltage.

Considering the results obtained in an overload situation with the P-f droop (Figure 7), it can be seen how the currents increase at the beginning, causing the current limitation to act to keep them equal to their rated value. As a consequence, the voltage decreases and the active powers $P_1$ and $P_2$ also decrease. This causes the P-f droop to increase the frequency generated by the inverters instead of decreasing it and the phase shift between them begins to increase, i.e., the inverters begin to desynchronise. Due to this, current begins to recirculate between the inverters, so the current delivered to the load is less than the total current of the same. This causes a decrease in the load voltage and, therefore, also in the active powers $P_1$ and $P_2$, making the situation even worse. In short, the P-f droop does not provide stable behaviour and does not enable the inverters to remain synchronised under these conditions.

In the case of overload with the $I_{act}$-f droop shown in Figure 8, it is observed how at the beginning the active currents $I_{act,1}$ and $I_{act,2}$ increase and remain close to the rated value of the current. This causes the frequencies generated by the inverters to remain practically constant instead of decreasing and the phase shift between inverters begins to increase, although more slowly than with the P-f droop. As a consequence, current begins to recirculate between the inverters, causing a decrease in load voltage. In this case, as the current depends less than the power on the voltage, a stable operating point is achieved. However, even though the inverters remain synchronised, the response provided by the $I_{act}$-f droop is not suitable either, since a high phase shift between inverters is obtained and the load voltage drops much more than necessary.

Regarding the results obtained with the $\delta$-f droop shown in Figure 9, the behaviour of the system when the overload occurs is different from that obtained with the P-f droop and $I_{act}$-f droop. When the overload is introduced, the load angles $\delta_1$ and $\delta_2$ increase above the rated value. In this way, the frequencies generated by the inverters decrease and the inverters remain synchronised without any phase shift appearing between them. As a consequence, no current recirculates between inverters, but all the current provided by them is delivered to the load and therefore the voltage thereof remains equal to 0.9 pu.

Finally, the behaviour of the system in the presence of a three-phase short-circuit with short-circuit voltage $U_{DC}$=10% is analysed. When the short circuit occurs, Figure 10 shows that the active powers are reduced while Figure 11 shows that the active currents remain practically constant. As a consequence, the droops do not impose the frequency reduction that would be required, giving rise to a difference in dif_delta angles that increases, i.e., causing a desynchronisation of the inverters. Therefore, when the short circuit is dissipated in the second 4, the large phase shift between inverters causes the current limitation to enter again and the voltage not to be recovered. On the contrary, the behaviour with the $\delta$-f droop is very different, as shown in Figure 12. When the short circuit occurs, the load angles $\delta_1$ and $\delta_2$ increase

considerably in relation to the value. In this way, the $\delta$-f droop maintains the same behaviour as under normal operating conditions, and the phase shift between inverters also remains close to zero during the short circuit. This enables the voltage in the load to recover quickly when the short circuit is cleared and current limiting is not required.

The electronic converter to which the method of the present invention is applied therefore functions as a voltage source. That is, the electronic converter is controlled at the output thereof as an alternating voltage source.

In this text, the term "comprises" and its derivations (such as "comprising", etc.) must not be understood in an exclusive sense, i.e., these terms must not be interpreted as excluding the possibility of what is described and defined including further elements, steps, etc.

In the context of the present invention, the term "approximately" and terms of the family thereof (such as "approximate", etc.) should be interpreted as indicating values very close to those that accompany said term. That is, a deviation within reasonable limits from an exact value should be accepted, because a person skilled in the art will understand that such a deviation from the indicated values may be unavoidable due to measurement inaccuracies, etc. The same applies to the terms "some", "around" and "substantially".

The invention is obviously not limited to the specific embodiment(s) that have been described, rather it also covers any variation that may be considered by any person skilled in the art (for example, in relation to the choice of materials, dimensions, components, configuration, etc.), within the general scope of the invention as defined in the claims.

**Claims**

1. A method for controlling an electronic converter ($10_n$), comprising:

   for each of the phases of the electronic converter ($10_n$), measuring an instantaneous current ($i_n$; $i_{r,n}$ $i_{s,n}$ $i_{t,n}$) and an instantaneous voltage ($v_n$; $v_{r,n}$ $v_{s,n}$ $v_{t,n}$) of the electronic converter ($10_n$);
   calculating (20), from the current measurements ($i_n$; $i_{r,n}$ $i_{s,n}$ $i_{t,n}$) and voltage measurements ($v_n$; $v_{r,n}$ $v_{s,n}$ $v_{t,n}$): an active power ($P_n$) exchanged by the electronic converter ($10_n$) and an effective value of voltage ($V_n$) of the electronic converter ($10_n$);
   calculating an effective value of voltage ($E_n$) imposed by the conversion step of the electronic converter ($10_n$);
   the method being **characterised by** the steps of:

   obtaining the load angle ($\delta_n$) or a load angle-dependent parameter ($\delta_n$) from the active power ($P_n$), the effective value of voltage ($V_n$) and the effective value of imposed voltage ($E_n$);
   calculating (26, 42) the frequency ($f_{e,n}$) of a voltage set-point that must be generated by the electronic converter ($10_n$) from the load angle ($\delta_n$) or the load angle-dependent parameter ($\delta_n$),
   obtaining (44) the voltage set-point ($V_{cons}$) that must be generated by the electronic converter ($10_n$) from the frequency ($f_{e,n}$).

2. The method of claim 1, wherein the frequency ($f_{e,n}$) of the voltage set-point that must be generated by the electronic converter ($10_n$), is obtained by applying a frequency droop (26, 42) to the load angle ($\delta_n$) or to the load angle ($\delta_n$) dependent parameter.

3. The method of claim 2, wherein the load angle ($\delta_n$) or the load angle-dependent parameter ($\delta_n$) is filtered (25) before applying the frequency droop (26, 42).

4. The method of any of claims 2-3, wherein the applied frequency droop (26) follows a linear function.

5. The method of any of claims 1-4, wherein the measured voltage ($v_n$; $v_{r,n}$ $v_{s,n}$ $v_{t,n}$) has been measured at the terminals of a capacitor of an output filter (2) of each phase of the electronic converter ($10_n$).

6. The method of any of claims 1-4, wherein the measured voltage ($v_n$; $v_{r,n}$ $v_{s,n}$ $v_{t,n}$) has been measured at the output of the electronic converter ($10_n$).

7. The method of any of claims 1-4, wherein the measured voltage ($v_n$; $v_{r,n}$ $v_{s,n}$ $v_{t,n}$) has been obtained by measuring the line voltage.

8. The method of any of claims 1-7, wherein the load angle ($\delta_n$) or the load angle-dependent parameter ($\delta_n$) is obtained from the following equation:

$$P_n = \frac{E_n \cdot V_n}{\left|\vec{Z}_n\right|^2} \cdot X_n \cdot sin(\delta_n) + \frac{V_n}{\left|\vec{Z}_n\right|^2} \cdot R_n \cdot (E_n \cdot cos(\delta_n) - V_n)$$

wherein $P_n$ is the active power exchanged by the electronic converter ($10_n$), $V_n$ is the effective value of voltage of the electronic converter ($10_n$), $E_n$ is the effective value of voltage imposed by the conversion step of the electronic converter ($10_n$) and $\vec{Z}_n = R_n + j\,X_n$ is the impedance of the filter (2) of the electronic converter ($10_n$).

9. The method of any of claims 1-7, wherein the load angle ($\delta_n$) or the load angle-dependent parameter ($\delta_n$) is obtained from the following equation:

$$P_n = \frac{E_n \cdot V_n}{X_n} \cdot sin(\delta_n)$$

wherein $P_n$ is the active power exchanged by the electronic converter ($10_n$), $V_n$ is the effective value of voltage of the electronic converter ($10_n$), $E_n$ is the effective value of voltage imposed by the conversion step of the electronic converter ($10_n$) and $X_n$ is the reactance of the filter (2) of the electronic converter ($10_n$).

10. The method of any of claims 1-9, further comprising applying a voltage droop (43) to obtain an amplitude value ($V_{droop}$) of the voltage set-point ($V_{cons}$) that must be generated by the electronic converter ($10_n$), and wherein said voltage set-point ($V_{cons}$) is obtained from said frequency ($f_{e,n}$) and from the amplitude value ($V_{droop}$).

11. The method of claim 10, wherein said voltage droop (43) uses reactive power or reactive current.

12. The method of any of claims 1-11, further comprising, once the voltage set-point ($V_{cons}$) has been obtained, applying a voltage control step (45) to determine a voltage ($e_{v,n}$; $e_{r,v,n}$, $e_{s,v,n}$, $e_{t,v,n}$) that must be imposed by the electronic converter ($10_n$) to get that voltage set-point ($V_{cons}$).

13. The method of claim 12, wherein the voltage control step (45) implements a voltage control in alpha and beta axes, or a voltage control in dq axes, or an open-loop voltage control.

14. The control method of any of claims 1-13, further comprising a current limiting step (46).

15. The method of claim 14, further comprising correcting the load angle ($\delta_n$) or the load angle-dependent parameter ($\delta_n$), to compensate for the phase shift introduced by the current limitation between the voltage set-point ($V_{cons}$) and the voltage imposed by the electronic converter ($10_n$).

16. The method of any of claims 1-15, further comprising correcting the load angle ($\delta_n$) or the load angle-dependent parameter ($\delta_n$), to compensate for any possible phase shift between the voltage set-point ($V_{cons}$) and the voltage imposed by the electronic converter ($10_n$).

17. The method of any of claims 1-16, wherein the function used to calculate (26, 42) the frequency ($f_{e,n}$) of a voltage set-point can be predetermined or can be dynamically modified by an external control unit.

18. The method of any of claims 1-17, applied to a plurality of electronic converters ($10_1$, $10_2$, ..., $10_n$) connected in parallel.

19. The method of any of claims 1-18, applied to one or more single-phase electronic converters.

20. The method of any of claims 1-18, applied to one or more three-phase electronic converters.

21. The method of any of claims 1-20, wherein the method is repeated at time instants that are marked according to a clock frequency.

22. A system for controlling an electronic converter ($10_n$) to carry out the method described in any one of claims 1 to 21, **characterised in that** it comprises:

means for measuring an instantaneous current ($i_n$; $i_{r,n}$ $i_{s,n}$ $i_{t,n}$) and an instantaneous voltage ($v_n$; $v_{r,n}$ $v_{s,n}$ $v_{t,n}$) of the electronic converter ($10_n$);

means for:

calculating, from the current measurements ($i_n$; $i_{r,n}$ $i_{s,n}$ $i_{t,n}$) and voltage measurements ($v_n$; $v_{r,n}$ $v_{s,n}$ $v_{t,n}$): an active power ($P_n$) exchanged by the electronic converter ($10_n$) and an effective value of phase voltage ($V_n$) of the electronic converter ($10_n$);

calculating an effective value of voltage ($E_n$) imposed by the conversion step of the electronic converter ($10_n$);

obtaining the load angle ($\delta_n$) or a load angle-dependent parameter ($\delta_n$) from the active power ($P_n$), the effective value of voltage ($V_n$) and the effective value of imposed voltage ($E_n$);

calculating the frequency ($f_{e,n}$) of a voltage set-point that must be generated by the electronic converter ($10_n$) from the load angle ($\delta_n$) or the load angle-dependent parameter ($\delta_n$); and

obtaining the voltage set-point ($V_{cons}$) that must be imposed in the electronic converter ($10_n$) from said frequency ($f_{e,n}$).

23. The control system of claim 22, further comprising a voltage controller (45).

24. The control system of any of claims 22 or 23, further comprising a current controller (46).

FIG. 1A

FIG. 1B

**FIG. 1C**

A $\vec{Z}_n = R_n + X_n \cdot j$ B

$I_n | -\varphi$

$E_n | \delta_n$ $\downarrow$ $\downarrow$ $V_n | 0°$

$\vec{E}_n$

$\vec{V}_n$ $\vec{Z}_n \cdot \vec{I}_n$

$\delta_n$

$\varphi_n$

$\vec{I}_n$

**FIG. 2**

**FIG. 3A**

EP 4 478 575 A1

**FIG. 3B**

**FIG. 4**

EP 4 478 575 A1

P-f droop

## FIG. 5

(State of the art)

$I_{act}$-f droop

## FIG. 6

(State of the art)

**P-f droop**

CN 10% overload

P_f_1 (pu) — · — P_f_2 (pu) ———

I_total_1 (pu) — · · — I_total_2 (pu) ———

f_e_1 — · · — f_e_2 ———

dif_delta (°) — · · —

V_load (pu) — · · —

Time (s)

**FIG. 7**

FIG. 8

EP 4 478 575 A1

FIG. 9

FIG. 10

**FIG. 11**

EP 4 478 575 A1

FIG. 12

# INFORME DE BÚSQUEDA INTERNACIONAL

| Solicitud internacional N° |
| --- |
| **PCT/ES2022/070067** |

## A. CLASIFICACIÓN DEL OBJETO DE LA SOLICITUD
**INV. H02J3/46**
**ADD.**
De acuerdo con la Clasificación Internacional de Patentes (CIP) o según la clasificación nacional y CIP.

## B. SECTORES COMPRENDIDOS POR LA BÚSQUEDA

Documentación mínima buscada (sistema de clasificación seguido de los símbolos de clasificación)
**H02J**

Otra documentación consultada, además de la documentación mínima, en la medida en que tales documentos formen parte de los sectores comprendidos por la búsqueda

Bases de datos electrónicas consultadas durante la búsqueda internacional (nombre de la base de datos y, si es posible, términos de búsqueda utilizados)
**EPO-Internal**

## C. DOCUMENTOS CONSIDERADOS RELEVANTES

| Categoría* | Documentos citados, con indicación, si procede, de las partes relevantes | Relevante para las reivindicaciones N° |
| --- | --- | --- |
| **X** | **US 2013/051103 A1 (ROSCOE ANDREW J [GB] ET AL)** 28 de febrero de 2013 (28.02.2013) párrafos **[0001], [0006], [0019], [0171]**; figuras **1,2,5,6** ----- | **1-24** |
| **A** | **CN 105 356 487 A (UNIV XI AN JIAOTONG)** 24 de febrero de 2016 (24.02.2016) figuras **1,2** ----- | **1,22** |
| **A** | **CN 104 617 597 B (ELECTRIC POWER PLANNING RES CT YUNNAN ELECTRIC POWER CO LTD)** 4 de enero de 2017 (04.01.2017) figuras **1,2,3** ----- | **1,22** |

☐ En la continuación del Recuadro C se relacionan otros documentos   ☒ Los documentos de familias de patentes se indican en el Anexo

| * Categorías especiales de documentos citados: | "T" documento ulterior publicado con posterioridad a la fecha de presentación internacional o de prioridad que no pertenece al estado de la técnica pertinente pero que se cita por permitir la comprensión del principio o teoría que constituye la base de la invención. |
| --- | --- |
| "A" documento que define el estado general de la técnica no considerado como particularmente relevante. | |
| "E" solicitud de patente o patente anterior pero publicada en la fecha de presentación internacional o en fecha posterior. | "X" documento particularmente relevante; la invención reivindicada no puede considerarse nueva o que implique una actividad inventiva por referencia al documento aisladamente considerado. |
| "L" documento que puede plantear dudas sobre una reivindicación de prioridad o que se cita para determinar la fecha de publicación de otra cita o por una razón especial (como la indicada). | |
| "O" documento que se refiere a una divulgación oral, a una utilización, a una exposición o a cualquier otro medio. | "Y" documento particularmente relevante; la invención reivindicada no puede considerarse que implique una actividad inventiva cuando el documento se asocia a otro u otros documentos de la misma naturaleza, cuya combinación resulta evidente para un experto en la materia. |
| "P" documento publicado antes de la fecha de presentación internacional pero con posterioridad a la fecha de prioridad reivindicada. | |
| | "&" documento que forma parte de la misma familia de patentes. |

| Fecha en que se ha concluido efectivamente la búsqueda internacional. 26 de septiembre de 2022 | Fecha de expedición del informe de búsqueda internacional **04/10/2022** |
| --- | --- |
| Nombre y dirección postal de la Administración encargada de la búsqueda internacional  European Patent Office, P.B. 5818 Patentlaan 2 NL - 2280 HV Rijswijk Tel. (+31-70) 340-2040, Fax: (+31-70) 340-3016 N° de fax | Funcionario autorizado

N° de teléfono |

Formulario PCT/ISA/210 (segunda hoja) (Enero 2015)

**INFORME DE BÚSQUEDA INTERNACIONAL**

Información relativa a miembros de familias de patentes

Solicitud internacional Nº

**PCT/ES2022/070067**

```
US 2013051103   A1    28-02-2013   EP        2566035 A2        06-03-2013
                                    US     2013051103 A1        28-02-2013
---------------------------------------------------------------------------
CN 105356487    A     24-02-2016   CN        105356487 A        24-02-2016
                                    CN        106816889 A        09-06-2017
---------------------------------------------------------------------------
CN 104617597    B     04-01-2017   NINGUNA
---------------------------------------------------------------------------
```

Formulario PCT/ISA/210 (anexo_familia de patentes) (Enero 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZHONG, Q. C.** ; **ZENG, Y.** Universal droop control of inverters with different types of output impedance. *IEEE access*, 2016, vol. 4, 702-712
- **B. JOHN** ; **A. GHOSH** ; **F. ZARE**. Load Sharing in Medium Voltage Islanded Microgrids With Advanced Angle Droop Control. *IEEE Transactions on Smart Grid*, November 2018, vol. 9 (6), 6461-6469
- **SHI, K.** ; **SONG, W.** ; **XU, P.** ; **LIU, R.** ; **FANG, Z.** ; **JI, Y.** Low-voltage ride-through control strategy for a virtual synchronous generator based on smooth switching. *IEEE Access*, 2017, vol. 6, 2703-2711

- **HU, QI et al.** Large signal synchronizing instability of PLL-based VSC connected to weak AC grid. *IEEE Transactions on Power Systems*, 2019, vol. 34 (4), 3220-3229
- **BRABANDERE, K.D.** ; **BOLSENS, B.** ; **KEYBUS, J.V. et al.** A voltage and frequency droop control method for parallel inverters. *IEEE Trans. Power Electron.*, 2007, vol. 22 (4), 1107-1115